(19) Europäisches Patentamt

European Patent Office

Office européen des brevets

(11) Veröffentlichungsnummer: **0 406 587 A2**

# (12) EUROPÄISCHE PATENTANMELDUNG

(21) Anmeldenummer: 90111043.7

(22) Anmeldetag: 12.06.90

(30) Priorität: 05.07.89 DE 8908177 U

(43) Veröffentlichungstag der Anmeldung:
09.01.91 Patentblatt 91/02

(84) Benannte Vertragsstaaten:
AT BE CH DE FR GB IT LI LU NL SE

(51) Int. Cl.⁵: **F16L 37/12**

(72) Erfinder: **Voges, Karl-Friedrich**
**Thüringer Strasse 2**
**D-3508 Melsungen(DE)**

(74) Vertreter: **Selting, Günther, Dipl.-Ing. et al**
**Patentanwälte von Kreisler, Selting, Werner**
**Deichmannhaus am Hauptbahnhof**
**D-5000 Köln 1(DE)**

(71) Anmelder: **B. Braun Melsungen AG**
**Carl-Braun Strasse**
**D-3508 Melsungen(DE)**

(54) Schlauchkupplung.

㊵ Eine Schlauchkupplung zwischen einem Halter (10) und einem an dem Halter aufzuhängenden verformbaren Behälter, z.B. einem Körpersekretbeutel, besteht aus einem Stutzen (121) an dem Halter (10), der von einem Mantelrohr (122) mit radialem Abstand umgeben ist und aus einem Zulaufschlauch (117) an dem Behälter, der auf den Stutzen (121) diesen abdichtend umgreifend aufgesteckt ist. Dabei ist erfindungsgemäß vorgesehen, daß der Zulafschlauch (117) eine nach außen vorspringende Radialprofilierung (119) aufweist, die von einer entsicherbaren Verriegelung in Form eines Schiebers (30) mit einer Schlüssellochöffnung (31) untergriffen ist, der in dem Mantelrohr (122) gelagert ist.

Eine solche Ausbildung versetzt die Schlauchkupplung in die Lage, bei aufrechterhaltener Dichtigkeit größere Zugkräfte aufzunehmen, so daß durch Verwendung größerer Beutel die Einsatz zeit jedes Beutels verlängerbar und das Pflegepersonal entlastet ist. Außerdem ist sie nach Sterilisation und längerer Lagerung zum Wechseln des Behälters noch gut lösbar, weil der Zulaufschlauch (117) nicht an dem Stutzen (121) festgesaugt wird.

FIG.2A

FIG.2C

EP 0 406 587 A2

## SCHLAUCHKUPPLUNG

Die Erfindung bezieht sich auf eine Schlauchkupplung zwischen einem Halter und einem an dem Halter aufzuhängenden verformbaren Behälter, bestehend aus einem Stutzen an dem Halter, der von einem Mantelrohr mit radialem Abstand umgeben ist und aus einem Zulaufschlauch an dem Behälter, del auf den Stutzen diesen abdichtend umgreifend aufgesteckt ist.

Schlauchkupplungen dieser Art werden z.B. bei Sekretsammelvorrichtungen eingesetzt, die Urindrainagegeräte mit oder ohne Meßbehälter sein können. Die Bezeichnung "Halter" steht im vorliegenden Falle für einen Meßbehälter oder einen beispielsweise plattenförmigen Träger, der Befestigungselemente zur Anhängung des verformbaren Behälters, insbesondere eines Beutels, aufweist. Die Schlauchkupplung zwischen Halter und Beutel dient einerseits zur flüssigkeitdichten Überleitung des flüssigen Sekrets, andererseits muß sie einen Teil des Beutelgewichtes tragen. Aus diesem Grunde muß ein relativ großes Übermaß zwischen dem Außendurchmesser des Stutzens am Halter und dem Innendurchmesser des Zulaufschlauches des Behälters gewählt werden, um die für die Kraftübertragung erforderliche hohe Haftreibung zu erzielen. Sekretsammelvorrichtungen werden je nach Kundenwunsch mit Wechselbeuteln oder mit Ablaßhahnbeuteln ausgerüstet. Insbesondere Ablaßhahnbeutel werden bereits bei der Hersteller-Montage der Sekretsammelvorrichtung mit dem Halter verbunden und der Zulaufschlauch wird an den Stutzen angeschlossen. In diesem Falle ist die Schlauchkupplung den erhöhten Temperaturen während der Sterilisation ausgesetzt; außerdem ist sie meistens einer relativ langen Lagerdauer bis zur Verwendung unterworfen. Diese Faktoren haben zur Folge, daß sich der Zulaufschlauch des Beutels auf dem Stutzen des Halters bei dem bisher üblichen Übermaß zwischen beiden Teilen derartig festsaugt, daß ein Wechseln des gefüllten Beutels nicht mehr durch ordnungsgemäße Trennung der Schlauchkupplung möglich ist. Wird nun das Übermaß zwischen Stutzen und Zulaufschlauch so verkleinert, daß der Beutelwechsel nach längerer Zeit noch möglich ist, kann die Schlauchkupplung den ihr zugedachten Anteil des Beutelgewichtes zumindest am Anfang nicht tragen und die Verbindung ist undicht. Da es sich bei dem zu sammelnden Sekret im allgemeinen um Urin handelt und die Sekretsammelvorrichtungen überwiegend im OP- und Intensivpflegebereich als Ein-Patienten-Gerät eingesetzt werden, sind die Dichtigkeit der Schlauchkupplung und die Auswechselbarkeit des Beutels unerläßlich.

Bei der eingangs erwähnten Schlauchkupplung gemäß EP 71 699 ist eine teleskopierbare Verbindung vorgese hen, die der Auslängung des Beutels unter dem Gewicht des Inhaltes folgen kann, ohne undicht zu werden. Sekretsammelvorrichtungen mit einer solchen Schlauchkupplung werden nicht in montiertem Zustand geliefert und sterilisiert, sondern es wird der Zulaufschlauch erst vom Verwender unmittelbar vor Gebrauch auf den Stutzen aufgesteckt. Der Beutel darf im übrigen nur begrenzte Größe haben, damit er nicht zu schwer wird und die verfügbare Aufschiebelänge der teleskopierbaren Verbindung für einen dichten Zusammenhalt der Schlauchkupplung ausreicht.

Der Erfindung liegt die Aufgabe zugrunde, eine Schlauchkupplung zu schaffen, die bei aufrechterhaltener Dichtigkeit zur Aufnahme größerer Zugkräfte in der Lage ist und nach Sterilisation und längerer Lagerung zum Wechseln des verformbaren Behälters noch lösbar ist.

Diese Aufgabe wird erfindungsgemäß dadurch gelöst, daß der Zulaufschlauch eine nach außen vorspringende Radialprofilierung aufweist, die von einer entsicherbaren Verriegelung an dem Mantelrohr untergriffen ist.

Hierbei wird die Funktion der Kraftübertragung von der Verriegelung als separate Sicherung übernommen mit dem Erfolg, daß das Übermaß zwischen dem Stutzen am Halter und dem Zulaufschlauch an dem verformbaren Behälter soweit vermindert werden kann, daß eine zuverlässige Abdichtung gerade noch gewährleistet ist und für das Aufstecken und Abziehen nur geringe Kräfte erforderlich sind. Das verminderte Übermaß verhindert ein Festsaugen des Zulaufschlauches an dem Stutzen bei der Sterilisation und nach längerer Lagerung, so daß Wechselbeutel oder Beutel mit Ablaßhahn vom Hersteller an dem Halter montiert und mit zusammengesteckter Schlauchkupplung geliefert werden können, was für den Anwender eine Erleichterung ist und die Sterilität bis zur Verwendung garantiert. Die Befreiung der Abdichtverbindung der Schlauchkupplung von dem Beutelgewicht erlaubt außerdem die Verwendung größerer Beutel, so daß die Einsatzzeit jedes Beutels verlängert und das Pflegepersonal entlastet wird.

Das Prinzip der Erfindung läßt sich in mehreren Varianten realisieren. In vorteilhafter Ausgestaltung ist vorgesehen, daß die Radialprofilierung als Ringschulter gestaltet ist und daß die Verriegelung als in einer Schlitzführung des Mantelrohres quer verstellbarer Schieber ausgebildet ist. Die Schlitzführung kann aus zwei gegenüberliegenden Umfangsschlitzen in dem Mantelrohr bestehen. Dabei ist vorzugsweise der Schieber als Platte mit einer Schlüssellochöffnung gestaltet, deren schmalerer Abschnitt dem Außendurchmesser des Zulaufschlauches unterhalb der Ringschulter angepaßt ist. Der breitere Abschnitt der Schlüssellochöffnung gestattet den Durchlaß des Aufsteckendes des Zulaufschlauches und seiner Ringschulter beim Aufstecken auf den Stutzen oder beim Abziehen von diesem. Bei koaxialer Ausrichtung von Stutzen und breiterem Abschnitt der Schlüssellochöffnung steckt der Anwender den Zulaufschlauch auf den Stutzen des Halters, der eine Tragplatte oder ein Meßbehältergerät sein kann. Dabei läßt der breitere Abschnitt der Schlüssellochöffnung den Zulaufschlauch durch. Nach dem Zusammenstecken von Zulaufschlauch und Stutzen wird der Schieber in seine zweite Endstellung bewegt, in der sein schmalerer Abschnitt die Ringschulter des Zulaufschlauches untergreift. Der Schieber wirkt damit wie eine von dem Mantelrohr getragene Gabel, die über das Mantelrohr das Beutelgewicht mitträgt. Auf diese Weise ist die Steckverbindung der Schlauchkupplung von dem Beutelgewicht entlastet und auch bei großen Beutelgewichten bleibt sie dicht.

Die axiale Länge des Schiebers ist so bemessen, daß er in beiden Endstellungen nur geringfügig über den Außenumfang des Mantelrohres vorsteht, damit er die Handhabung beim Wechseln des Beutels nicht behindert. Vorzugsweise ist die Ringschulter am Übergang des Zulaufschlauches zu einer endseitigen Erweiterung angeordnet. Zwischen dem Innendurchmesser des Zulaufschlauches an den Erweiterungen und dem Außendurchmesser des vorteilhafterweise als Olive ausgebildeten Stutzens ist das Übermaß so gewählt, daß bei den vorkommenden Drücken eine flüssigkeitsdichte Verbindung gewährleistet ist und die Betätigungskräfte zur Herstellung und Trennung der Steckverbindung, zumutbar gering sind. Die axiale Länge der Erweiterung, d.h. der Abstand zwischen der Ringschulter und der endseitigen Öffnung des Zulaufschlauches kann der Länge des Stutzens, auf den die Erweiterung aufgeschoben wird, etwa entsprechen. Wenn das mantelrohr das Stutzenende überragt und die Umfangsschlitze in dem Überstandsstück ausgebildet sind, befindet sich der Schieber außerhalb der Steckverbindung und diese bleibt frei von jeglichen radialen Kräften, die ein Festsaugen des Zulaufschlauches auf dem Stutzen begünstigen könnten.

Gemäß einer anderen Ausbildung der Erfindung ist vorgesehen, daß die Verriegelung mindestens eine schwenkbare Klinke mit einem Sicherungsteil aufweist, der mit der Radialprofilierung des Zulaufschlauches zusammengreift. Dabei kann die Radialprofilierung eine öffnungsferne Ringschulter sein und es können zwei Klinken in Form gegenüberliegender axialer Schnapphaken vorgesehen sein. Die einwärts gerichteten Hakenteile der Schnapphaken untergreifen die Ringschulter des zulaufschlauches und stellen die mechanische Verbindung zwischen dem Halter und dem Zulaufschlauch her, die die dichte Steckverbindung von Zugkräften durch das Beutelgewicht entlastet. Die beiden Schnapphaken können ein freies Betätigungsende aufweisen und ihr Hakenende kann in den Umfang des Mantelrohres inkorporiert sein. Auch diese Schlauchkupplung ist zusammensteckbar ohne Drehbewegung des Schlauches. Sie ist leicht lösbar auch nach Sterilisation und längerer Lagerdauer. Außerdem ist sie billig, weil kein zusätzliches Einzelteil erforderlich ist. Der Stutzen an dem Halter darf ein Spritzgießteil sein.

Alternativ ist die Radialprofilierung eine Ringwulst und die Klinke ist als Schnapphaken ausgebildet, der in die Umfangsfläche des Mantelrohres inkorporiert und um eine axiale Achse schwenkbar ist. Der Hakenteil dieses Schnapphakens ragt in bezug auf das Mantelrohr nach innen und untergreift die Ringwulst, die sich vorzugsweise am Rand der Öffnung des Zulaufschlauches befindet.

In weiterer Ausgestaltung der zweiten Erfindungsausbildung kann die Radialprofilierung mindestens einen nasenartigen Vorsprung aufweisen und es kann die Klinke eine axiale Schnappzunge mit einer Öffnung zur Aufnahme des nasenartigen Vorsprunges sein. Die Schnappzunge ist in den umfangsmäßigen Verlauf des Mantelrohres einbezogen und wird vorzugsweise mittels einer nach außen abgebogenen Handhabe nach außen gezogen, um den Eingriff von Vorsprung und Öffnung zu trennen, so daß der Zulaufschlauch einfach von dem Stutzen abgezogen bzw. auf diesen aufgesteckt werden kann. Bei Aufschieben des Zulaufschlauches auf den Stutzen rastet der Vorsprung selbsttätig in die Öffnung der federnden Schnappzunge ein. Öffnung und Vorsprung sind einander angepaßt. Sie können rund oder eckig sein.

Während bei den vorangehend geschilderten Ausführungsformen das Mantelrohr im wesentlichen aus starrem Material besteht, kann es alternativ aus elastisch verformbarem Material gebildet und mit Wandöffnungen zur Aufnahme von nasenartigen Vorsprüngen des Zulaufschlauches ausgestattet sein. Zum Entkoppeln bzw. Koppeln von Mantelrohr und Zulaufschlauch wird das weiche Mantelrohr quer zu den zusammengreifenden Teilen flachgedrückt, so daß es ovale Form annimmt und die nasenartigen Vorsprünge aus den Wandöffnungen heraus- bzw. in diese hineingelangen.

Ferner kann die Radialprofilierung aus zwei gegenüberliegenden elastischen Spreizarmen gebildet sein, deren freie Enden in Wandöffnungen des Mantelrohres einschnappen. Dabei sind die freien Enden der Spreizarme durch die Wandöffnungen des Mantelrohres hindurch von außen erreichbar und radial einwärtsdrückbar, um die Schlauchkupplung zu trennen. Beim Aufstecken des Zulaufs- schlauches auf den Stutzen werden die Spreizarme zunächst gegen den Zulaufschlauch angedrückt und schnellen radial nach außen, sobald ihre freien Enden in den Bereich der Wandöffnungen gelangen.

In weiterer zweckmäßiger Ausgestaltung der Erfindung ist vorgesehen, daß die Radialprofilierung aus mindestens einem öffnungsnahen nasenartigen Vorsprung gebildet ist, der mit einem Wendelgang des Mantelrohres bajonettverschlußartig zusammengreift. Hierbei wird der Zulaufschlauch vor der Kupplung mit dem Stutzen so verdreht, daß er sich beim Zusammenstecken von Zulaufschlatich und Stutzen zurückdreht und die Schlauchkupplung drallfrei ist. Zur Erleichterung der Entkopplung kann an dem Zulafschlauch ein Rändelring ausgebildet sein, der über das Mantelrohrende vorsteht und als Griffhilfe dient. Bei Fehlen eines solchen Rändelringes kann eine Schlauchklemme, die sowieso zum Abquetschen des Zulaufschlauches beim Wechseln des Beutels vorhanden ist, als Griffhilfe in Form eines Hebels dienen.

In der Zeichnung sind Ausführungsbeispiele der Erfindung schematisch dargestellt.

Es zeigt:

Fig. 1 eine schematische Ansicht eines an einem Halter aufgehängten Urinsammelbeutels,

Fig. 2 eine Verriegelung in Form eines Schiebers,

Fig. 2A zwei verschiedene Positionen des Schiebers in bezug auf Zulaufschlauch und Mantelrohr,

Fig. 2B einen senkrechten Schnitt durch die Schlauchkupplung im Verriegelungszustand,

Fig. 2C die Anordnung nach Fig. 2B um 180° gedreht,

Fig. 2D eine abgewandelte Form des Stutzens,

Fig. 3 einen senkrechten Schnitt durch eine zweite Ausführungsform einer Schlauchkupplung,

Fig. 3A eine Ansicht der Schlauchkupplung nach Figur 3,

Fig. 3B einen Schnitt längs der Linie B-B in Figur 3,

Fig. 4 einen senkrechten Schnitt durch eine dritte Ausführungsform einer Schlauchkupplung,

Fig. 4A eine Ansicht der Schlauchkupplung nach Figur 4,

Fig. 4B einen Schnitt längs der Linie B-B in Figur 4,

Fig. 5 einen senkrechten Schnitt durch eine vierte Ausführungsform einer Schlauchkupplung,

Fig. 5A eine Ansicht der Schlauchkupplung nach Figur 5,

Fig. 5B eine Ansicht einer alternativen Ausbildung der Öffnung in der Schnappzunge,

Fig. 6 einen senkrechten Schnitt durch eine fünfte Ausführungsform einer Schlauchkupplung,

Fig. 6A einen Querschnitt durch die Anordnung nach Figur 6 im Entkopplungszustand,

Fig. 7 einen senkrechten Schnitt durch eine sechste Ausführungsform einer Schlauchkupplung,

Fig. 8 einen senkrechten Schnitt durch eine siebente Ausführungsform einer Schlauchkupplung in auseinandergezogenem Zustand,

Fig. 8A eine Ansicht der Anordnung nach Figur 8 um 90° verdreht,

Fig. 8B einen Querschnitt durch die Stutzenanordnung,

Fig. 8C eine Alternative der Ausbildung des Zulaufschlauchendes mit Rändelring und

Fig. 9 eine Schlauchklemme zur Verwendung mit einer der Schlauchkupplungen.

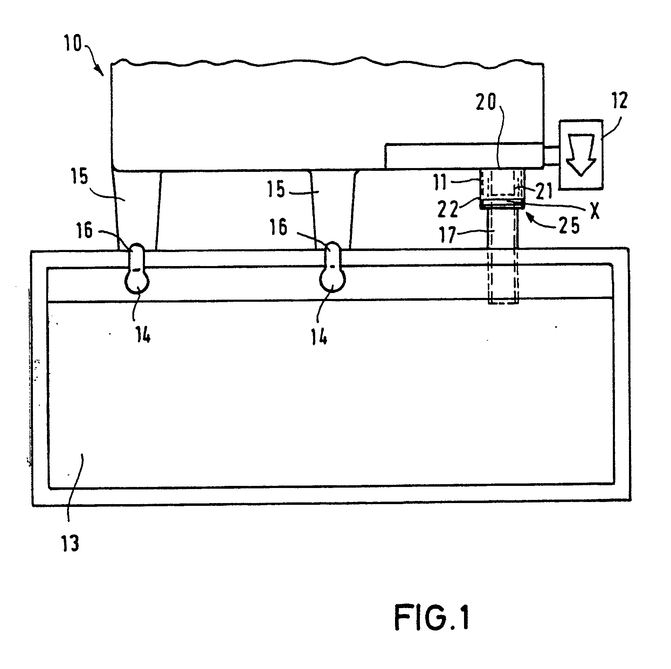

Die in Figur 1 dargestellte Sekretsammelvorrichtung besteht aus einem Halter 10, der eine Platte mit einer Greiföse oder ein Meßbehälter für Urin sein kann, der im Bereich eines Auslasses 11 ein Ablaßventil 12 aufweist und aus einem verformbaren Behälter, der ein Urinbeutel 13 sein kann, welcher an seinem oberen verstärkten Rand Ösen 14 aufweist. Von dem Halter 10 gehen nach unten Arme mit Aufhängehaken 16 zur Anhängung der Ösen 14 des Urinbeutels 13 aus. Mit dem gegenseitigen Abstand der Ösen 14 etwa entsprechendem Abstand ist in den oberen Rand des Urinbeutels 13 ein Zulaufschlauch 17 so eingeschweißt, daß er mit seinem unteren Endteil in den Urinbeutel 13 hineinragt und mit seinem oberen Endteil nach außen vorsteht. Am unteren Endteil des Zulaufschlauches 17 kann ein nicht gezeichnetes Folienventil befestigt sein, dessen oberer Rand um das untere Zulaufschlauchende herumgelegt ist und das zwei flach aneinanderliegende Folienteile aufweist, zwischen denen das aus dem Zulaufschlauch 17 herabfallende Sekret nach unten strömt.

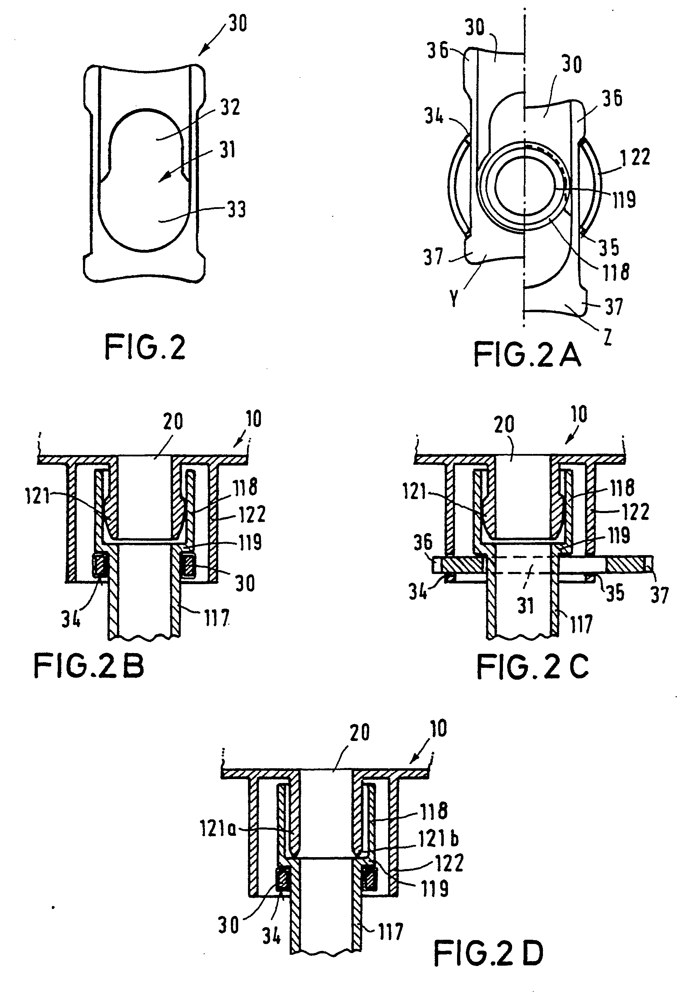

Am Boden des Halters 10 befindet sich eine Auslaßöffnung 20, die von einem steifen Stutzen 21 umgeben ist, der seinerseits mit radialem Abstand innerhalb eines Mantelrohres 22 verläuft, das das Ende des Stutzens 21 überragt. Auf den Stutzen 21 ist mit geringfügigem Übermaß das Ende des Zulaufschlauches 17 aufgeschoben, und zur mechanischen Sicherung gegen axiales Auseinanderziehen dieser Steckverbindung dient eine Verriegelung X, die in den Figuren 2 bis 8 in mehreren Ausgestaltungen veranschlicht ist. Die Teile 17, 21, 22 und X bilden die Schlauchkupplung 25, die flüssigkeitsdicht sowie leicht montierbar und demontierbar ist, und die einen Teil des Beutelgewichtes tragen kann, weil die Verriegelung X unabhängig von der Steckverbindung zwischen Stutzen 21 und Zulaufschlauch 17 der Kraftübertragung dient.

Figuren 2 bis 2C zeigen eine Möglichkeit der Ausbildung der Schlauchkupplung mit einer Verriegelung in Form eines Schiebers 30. Der Schieber 30 ist als flache rechteckige Platte ausgebildet, die eine Schlüssellochöffnung 31 mit einem schmaleren Abschnitt 32 und einem Abschnitt 33 größeren Durchmessers aufweist. Der Zulaufschlauch 117 ist an seinem öffnungsnahen Ende mit einer Erweiterung 118 versehen, wodurch eine Ringschulter 119 entsteht, die rechtwinklig an den Teil kleineren Durchmessers des Zulaufschlauches 117 anschließt. Die Erweiterung 118 ist mit geringem Übermaß auf den Stutzen 121 aufgesteckt, der als Olive mit einer ringsumlaufenden äußeren Verdickung ausgebildet ist. Das Übermaß ist so gewählt, daß eine zuverlässige Abdichtung gerade noch gewährleistet ist, daß aber für das Aufstecken und Abziehen nur geringe Kräfte erforderlich sind, so daß bei Sterilisation und Lagerung ein Festsaugen des Zulaufschlauches 117 auf dem Stutzen 121 ausgeschlossen ist.

Dies gilt für sämtliche nachfolgend beschriebenen Ausführungsbeispiele gleichermaßen. Der Stutzen 121 ist mit radialem Abstand von dem Mantelrohr 122 mit kreisförmigem Querschnitt umgeben. In dem Mantelrohr 122 befinden sich im Bereich des unteren offenen Endes jenseits des Stutzenendes zwei einander diametral gegenüberliegende Umfangsschlitze 34, 35, in denen der Schieber 30 in Querrichtung verschiebbar gelagert ist. Da der größere Abschnitt 33 der Schlüssellochöffnung 31 dem Außendurchmesser der Erweiterung 118 des Zulaufschlauches 117 angepaßt ist, während der schmalere Abschnitt 32 etwa dem Außendurchmesser des Zulaufschlauches 117 unterhalb der Ringschulter 119 entspricht, kann in der Position Y (Fig.2A - linke Seite) der Zulaufschlauch 117 durch die Schlüssellochöffnung 31 hindurch auf den Stutzen 121 aufgesteckt werden. Sodann wird der Schieber 30 in seine zweite Position Z (Fig.2A - rechte Seite) verstellt, so daß der schmalere Abschnitt 32 der Schlüssellochöffnung 31 in Aktion tritt und die Ränder des Schiebers 30 in diesem Bereich die Ringschulter 119 untergreifen. Die umfangsmäßige Länge der beiden Umfangsschlitze 34, 35 ist so bemessen, daß ihre Enden Anschläge für seitliche Vorsprünge 36, 37 des Schiebers bilden, so daß die Endstellungen Y und Z definiert sind und sowohl die Verriegelung als auch die Entriegelung der Schlauchkupplung keiner besonderen Sorgfalt bedarf. Im Verriegelungszustand (Position Z), der in Figuren 2B und 2C veranschaulicht ist, wird das Gewicht des Beutels 13 sowohl von den beiden Haken 16 als auch von dem Schieber 30 an dem Mantelrohr 122 getragen. Dadurch bleibt die abdichtende Steckverbindung zwischen dem Stutzen 121 und der Erweiterung 118 des Zulaufschlauches 117 von axialen Belastungen frei und ein Preßsitz, der ein Festsaugen zur Folge

haben könnte, erübrigt sich. Die Verbindung zwischen der Erweiterung 118 des Zulaufschlauches 117 und dem Stutzen kann so locker sein, daß es genügt, - wie in Figur 2D dargestellt - die freie Stirnkante eines Stutzens 121a mit kreiszylindrischer Außenfläche anzuspitzen, so daß eine ringsumverlaufende spitze Kante 121b entsteht, deren scharfer Rand in das nachgiebige Material der Innenfläche der Ringschulter 119 der Erweiterung 118 eindrückt. Die zylindrische Außenfläche des Stutzens 121a liegt gegen die zylindrische Innenfläche der Erweiterung 118 ganz flächig an und dar Zusammenstecken bzw. Auseinanderziehen beider Teile nach entsprechender Einstellung des Schiebers 30 läßt sich ohne Kraftaufwand durchführen.

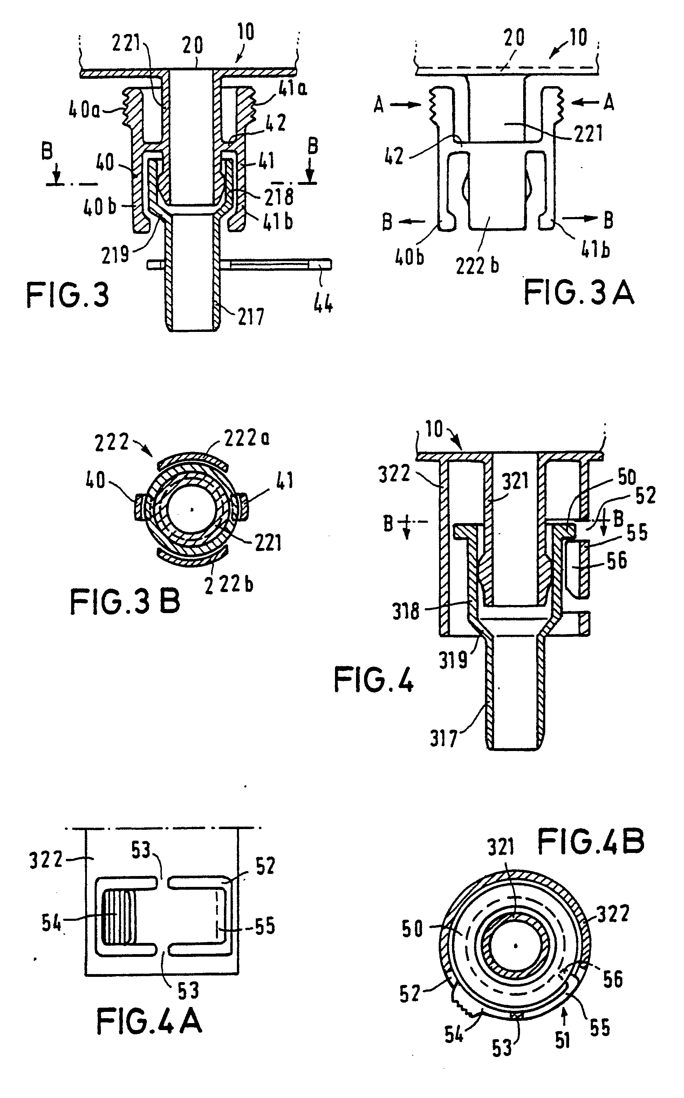

Bei dem in den Figuren 3, 3A, 3B gezeigten Beispiel besteht die Verriegelung aus zwei axialen Schnapphaken 40, 41, die zwischen ihrem oberen Griffende 40a, 41a und ihrem unteren Hakenende 40b, 41b kippbar gelagert sind. Als Kipplager dient ein Ring 42, der mit Abstand zur unteren Mündung des Stutzens 221 an diesem radial gerichtet ausgebildet ist. Zwischen den beiden Schnappha ken 40,41 erstrecken sich zwei diametral gegenüberliegende gewölbte Segmente 222a, 222b des Mantelrohres 222, das über die Mündung des Stutzens 221 ein Stück vorsteht. An den Hakenteilen 40b, 41b sind radial einwärtsgerichtete Hakenvorsprünge ausgebildet, die eine Ringschulter 219 unterfangen, welche sich am Übergang zwischen dem Zulaufschlauch 217 und seiner kelchförmigen Erweiterung 218 befindet. Die Ringschulter 219 verläuft schräg aufwärts. Zur Entkopplung werden die oberen Griffenden 40a, 41a der Schnapphaken 40, 41 in Richtung der Pfeile A in Figur 3A gegeneinandergedrückt, so daß sie um ihre Verbindungsstelle mit dem Ring 42 kippen und ihre Hakenenden 40b, 41b in Richtung der Pfeile B von der Ringschulter 219 weggeschwenkt werden, so daß der Zulaufschlauch 217 abgezogen und der Beutel 13 nach Absperrung durch eine Schlauchklemme 44 entsorgt werden kann.

Eine weitere Alternative einer Schlauchkupplung ist in Figuren 4 bis 4B gezeigt. In diesem Falle ist der Zulaufschlauch 317 an seinem äußeren Rand mit einer nach außen gerichteten Ringwulst 50 versehen, die in etwa auf halber Länge des Stutzens 321 angeordnet isc. Der Stutzen 321 kann als Olive mit einer äußeren umlaufenden Verdickung ausgebildet sein. Der Zulaufschlauch 317 kann über eine Ringschulter 319 in eine Erweiterung 318 übergehen. Das Mantelrohr 322, das sich über das Ende des Stutzens 321 hinaus erstreckt, ist durch einen Schnapphaken 51 unterbrochen, der in ein umfangsmäßiges Fenster 51 des Mantelrohres 322 so eingesetzt ist, daß er einen zweiarmigen Hebel bildet, der um eine in der Längsachse des Mantelrohres 322 verlaufende Achse 53 schwenkbar ist. Das eine Hebelende 54 dient als Drucktaste und das andere Hebelende 55 ist mit einem einwärts gerichteten Haken 56 ausgerüstet, der die Ringwulst 50 untergreift, wie Figur 4 zeigt. Da die Achse 53 aus zwei gegenüberliegenden Stegen des Mantelrohrmaterials in der Mitte des Randes des Fensters 52 besteht, ergibt sich eine gewisse Rückstellfähigkeit des Schnapptiakens 51 und nach radialem Ausschwenken des Hakens 56 durch Druckausübung gegen den Hebel 54 zum Aufschieben der Erweiterung 318 auf den Stutzen 321 schnappt der Schnapphaken 51 in die umfangsbündige Position gemäß Figur 4B zurück und der Haken 56 greift verriegelnd unter die Ringwulst 50.

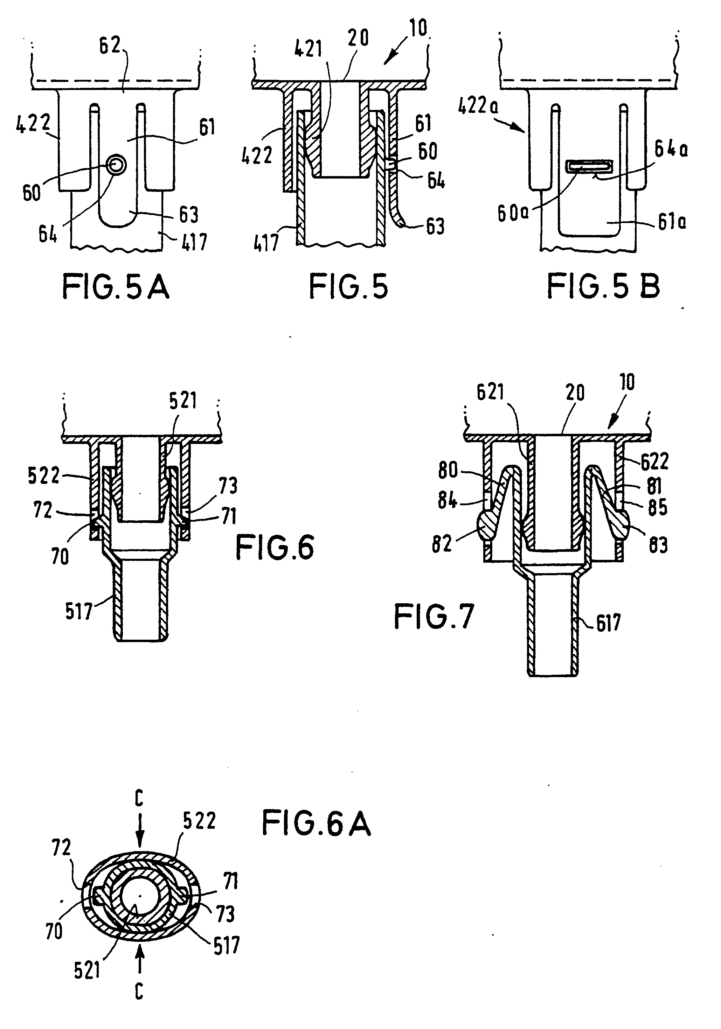

Figur 5 bis 5B veranschaulicht eine weitere Alternative zur Verriegelung eines Zulaufschlauches 417 mit einem Stutzen 421. Hierbei ist der Zulaufschlauch 417 im Abstand zu seiner Öffnung mit mindestens einem nasenartigen Vorsprung 60 versehen, der kreisförmig oder eckig sein kann und radial nach außen gerichtet ist. Im Bereich des nasenartigen Vorsprunges 60 befindet sich eine in die Umfangsfläche des Mantelrohres 422 inkorporierte axiale Schnappzunge 61, die um ihre Anschlußlinie 62 an das Material des Mantelrohres 422 federnd schwenkbar ist. Am unteren Ende der Schnappzunge 61 befindet sich eine nach außen gebogene Lasche 63, die das Untergreifen zum radialen Abspreizen der Schnappzunge 61· erleichtert, wenn der nasenartige Vorsprung 60 aus einer Öffnung 64 in der Schnappzunge 61 freigegeben werden soll. Die Form der Öffnung 64 ist derjenigen des Vorsprunges 60 angepaßt (Figur 5A). Figur 5B zeigt einen rechteckigen nasenartigen Vorsprung 60a, der in eine rechteckige Öffnung 64a der Schnappzunge 61a eingreift, die in die Umfangsfläche des Mantelrohres 422a einbezogen ist.

Nasenartige Vorsprünge 70, 71 dienen auch bei dem Beispiel der Figuren 6, 6A als Radialprofilierung im Endbe reich eines Zulaufschlauches 517. Die beiden Vorsprünge 70, 71 können beliebige Umfangsgestalt haben und liegen einander diametral gegenüber. Sie rasten in Wandöffnungen 72, 73 ein, die in einem Mantelrohr 522 aus elastischem Material ausgebildet sind. Zum Entkoppeln dieser Verriegelung wird das Mantelrohr 522 quer zu den Vorsprüngen 70, 71 radial zusammengedrückt (Pfeile C in Figur 6A), so daß das Mantelrohr 522 im Querschnitt ovale Form annimmt und die Vorsprünge 70, 71 aus den Wandöffnungen 72, 73 freikommen. In diesem Zustand der Schlauchkupplung kann der Zulaufschlauch 517 von dem Stutzen 521 abgezogen werden. Beim Aufschieben des Zulaufschlauches 517 gibt das Mantelrohr 522 selbsttätig nach und das Einrasten der Vorsprünge 70, 71 erfolgt automatisch.

Eine selbsttätige Verriegelung ergibt sich auch bei dem Beispiel der Figur 7. In diesem Falle sind an das Mündungsende des elastischen Zulaufschlauches 617 zwei diametral gegenüberliegende Spreizarme 80, 81 angeformt, deren freie Enden nach außen gerichtete Verdickungen 82, 83 aufweisen können. Die Spreizarme 80, 81 stehen schräg von der Außenfläche des Zulaufschlauches 617 ab und die Verdickungen 82, 83 ragen in Wandöffnungen 84, 85 in dem Mantelrohr 622 hinein. Die Unterkante der Wandöffnungen 84, 85 dient als Verriegelung für den Zulaufschlauch 617, der auf den Stutzen 621 aufgesteckt ist. Zur Entriegelung werden die beiden Spreizarme 80, 81 durch die Wandöffnungen 84, 85 hindurch radial einwärts gedrückt, so daß die Verdickungen 82, 83 längs der Innenfläche des Mantelrohres 622 aus dessen unterer Öffnung austreten können.

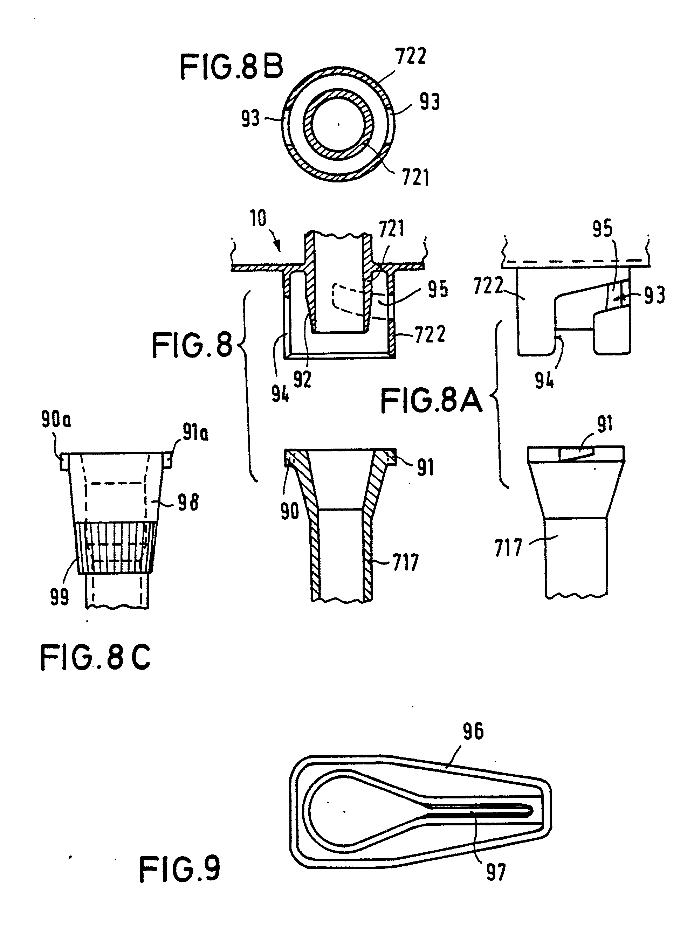

Figuren 8 bis 8C veranschaulichen eine als Bajonettver schluß wirksame Verriegelung. Hierbei sind am Mündungsende des Zulaufschlauches 717 zwei diametral gegenüberliegende nasenartige Vorsprünge 90, 91 mit schräger Unterflanke ausgebildet. Das Anschlußende des Zulaufschlauches 717 erweitert sich trichterförmig und paßt auf den Stutzen 721, der mit einer kegelförmigen äußeren Abschrägung 92 versehen ist. In der Wand des Mantelrohres 722 sind zwei gegenüberliegende Wendelgänge 93 ausgebildet, die jeweils aus einem offenen Axialabschnitt 94 und einem schräg ansteigenden Abschnitt 95 bestehen. Da der Zulaufschlauch 717 fest in den Beutel 13 eingeschweißt ist, muß er vor Einführung der Vorsprünge 90, 91 in die Wendelgänge 93 so verdreht werden, daß in der verriegelten Endstellung der Vorsprünge 90, 91 der Zulaufschlauch 717 entspannt und drallfrei ist. Da bei dem Beispiel der Figuren 8 bis 8B die trichterförmige Erweiterung des Zulaufschlauches 717 in dem Mantelrohr 722 verschwindet, kann als Handhabe bei der Verriegelung und Entriegelung eine herkömmliche Schlauchklemme 96 dienen, die während des Sekretsammelvorganges den Querschnitt des Zulaufschlauches 717 nicht einschnürt und die zur Entriegelung der Schlauchkupplung so auf den Zulaufschlauch 717 aufgeschoben wird, daß ihr schlitzartiger Teil 97 den Zulaufschlauch 717 flach zusammenquetscht und seine Drehung relativ zum Mantelrohr 722 mit Hilfe der Schlauchklemme 96 ermöglicht. Wenn dieses Hilfsmittel unerwünscht ist, kann an dem Zulaufschlauch 717 ein Kopfteil ausgebildet sein, der die Vorsprünge 90a, 91a aufweist und der außerdem mit einer axialen Verlängerung 99 ausgestattet ist, die als Griffhilfe gerändelt ist und die über den unteren Rand des Mantelrohres 722 vorsteht.

**Ansprüche**

1. Schlauchkupplung zwischen einem Halter (10) und einem an dem Halter aufzuhängenden verformbaren Behälter (13), bestehend aus einem Stutzen (21) an dem Halter (10), der von einem Mantelrohr (22) mit radialem Abstand umgeben ist und aus einem Zulaufschlatich (17) an dem Behälter (13), der auf den Stutzen (21) diesen abdichtend umgreifend aufgesteckt ist,
**dadurch gekennzeichnet, daß**
der Zulaufschlauch (17) eine nach außen vorspringende Radialprofilierung aufweist, die von einer entsicherbaren Verriegelung an dem Mantelrohr (22) untergriffen ist.

2. Schlauchkupplung nach Anspruch 1,
**dadurch gekennzeichnet, daß**
die Radialprofilierung als Ringschulter (119) gestaltet ist und daß die Verriegelung als in einer Schlitzführung des Mantelrohres (122) querverstellbarer Schieber (30) ausgebildet ist.

3. Schlauchkupplung nach Anspruch 2,
**dadurch gekennzeichnet, daß die**
Schlitzführung aus zwei gegenüberliegenden Umfangsschlitzen (34,35) in dem Mantelrohr (122) besteht.

4. Schlauchkupplung nach Anspruch 2 oder 3,
**dadurch gekennzeichnet, daß**
der Schieber (30) als Platte mit einer Schlüssellochöffnung (31) gestaltet ist, deren schmalerer Abschnitt (32) dem Außendurchmesser des Zulaufschlauches (117) unterhalb der Ringschulter (119) angepaßt ist.

5. Schlauchkupplung nach einem der Ansprüche 2 bis 4,
**dadurch gekennzeichnet, daß**
die Ringschulter (119) am Übergang des Zulaufschlauches (117) zu einer endseitigen Erweiterung (118) angeordnet ist.

6. Schlauchkupplung nach Anspruch 1,
**dadurch gekennzeichnet, daß**
die Verriegelung mindestens eine schwenkbare Klinke mit einem Sicherungsteil aufweist, der mit der Radialprofilierung des Zulaufschlauches zusammengreift.

7. Schlauchkupplung nach Anspruch 6,
**dadurch gekennzeichnet, daß**
die Radialprofilierung eine öffnungsferne Ringschulter (219) ist und daß zwei Klinken in Form gegenüberliegender axialer Schnapphaken (40,41) vorgesehen sind (Fig. 3).

8. Schlauchkupplung nach Anspruch 6,
**dadurch gekennzeichnet, daß**
die Radialprofilierung eine Ringwulst (50) ist und daß die Klinke als Schnapphaken (51) ausgebildet ist, der in die Umfangsfläche des Mantelrohres (322) inkorporiert und um eine axiale Achse (53) schwenkbar ist (Fig. 4).

9. Schlauchkupplung nach Anspruch 6,
**dadurch gekennzeichnet, daß**

die Radialprofilierung mindestens einen nasenartigen Vorsprung (60) aufweist und daß die Klinke eine axiale Schnappzunge (61) mit einer Öffnung (64) zur Aufnahme des nasenartigen Vorsprunges (60) ist (Fig. 5).

10. Schlauchkupplung nach Anspruch 1,
**dadurch gekennzeichnet, daß**
die Radialprofilierung aus mindestens einem nasenartigen Vorsprung (70,71) besteht und daß das Mantelrohr (522) aus elastisch verformbarem Material gebildet ist und Wandöffnungen (72,73) zur Aufnahme der Vorsprünge (70,71) aufweist (Fig. 6).

11. Schlauchkupplung nach Anspruch 1,
**dadurch gekennzeichnet, daß**
die Radialprofilierung aus zwei gegenüberliegenden elastischen Spreizarmen (80,81) gebildet ist, deren freie Enden (82,83) in Wandöffnungen (84,85) des Mantelrohres (622) einschnappen (Fig. 7).

12. Schlauchkupplung nach Anspruch 1,
**dadurch gekennzeichnet, daß**
die Radialprofilierung aus mindestens einem öffnungsnahen nasenartigen Vorsprung (90,91) gebildet ist, der mit einem Wendelgang (93) des Mantelrohres bajonettverschlußartig zusammengreift (Fig. 8).

FIG.1

FIG.2

FIG.2A

FIG.2B

FIG.2C

FIG.2D

9

FIG.3

FIG.3 A

FIG.3 B

FIG.4

FIG.4 A

FIG.4B

FIG.5A

FIG.5

FIG.5 B

FIG.6

FIG.7

FIG.6 A

FIG.8 B

722

93

93

721

10

721

95

FIG.8

95

722

722

93

94

92

94

FIG.8A

94 92

FIG.8C

90a

91a

98

91

91

90

99

717

717

717

FIG.9

96

97